# EUROPEAN PATENT SPECIFICATION

(11) **EP 4 220 007 B1**
(45) Date of publication and mention of the grant of the patent: **13.05.2026**
(21) Application number: 23150209.7
(22) Date of filing: 03.01.2023
(51) Int. Cl.: F21S 8/08, F21S 9/02, F21V 23/00, H01M 50/574, F21S 9/03

(54) **STREETLIGHT**
STRASSENLEUCHTE
RÉVERBÈRE

(30) Priority: 01.02.2022 JP 2022014370
(43) Date of publication of application: 02.08.2023
(73) Proprietor: Suzuki Motor Corporation, Hamamatsu-shi, Shizuoka 432-8611 (JP)
(72) Inventor: MITSUOKA, Shigehi, Hamamatsu-shi, 432-8611 (JP); SUZUKI, Takafumi, Hamamatsu-shi, 432-8611 (JP); FURUKI, Kazushi, Hamamatsu-shi, 432-8611 (JP); HIGASHI, Naoki, Hamamatsu-shi, 432-8611 (JP); ASANO, Toru, IKAWA, 018-1512 (JP)
(74) Representative: Plasseraud IP

(56) References cited:
- CN-U- 204 652 727
- CN-U- 211 399 584
- KR-A- 20120 117 477

## Description

### [Technical Field]

The present invention relates to a streetlight.

### [Background Art]

In recent years, efforts have been made to reuse battery packs that had been mounted on a vehicle. Since there is a problem that such efforts are unprofitable when the battery pack is dismantled into cells and modules, the battery pack is reused as it is.

However, a battery pack using small lithium ion batteries has a small battery capacity, and therefore cannot be used as it is for household power. Against this background, one reuse application of a battery pack using small lithium ion batteries is a streetlight electric storage device. Further, the streetlight may be a solar-type streetlight (hereinafter referred to as a "solar streetlight"). An example of a streetlight can be found for instance in CN 204 652 727 U or CN 211 399 584 U.

Performance such as capacity and internal resistance of a battery pack collected from the market is deteriorated as compared to a new battery pack, and performance varies among battery packs. In consideration of such circumstances, it is necessary to increase the capacity by combining a plurality of battery packs when reusing battery packs. An example of a battery pack can be found for instance in KR 2012 0117477 A.

JP2011-155232A discloses a streetlight using a photovoltaic power supply device in which a battery pack is disposed at the same height as a solar panel to reduce the risk of water immersion into a battery box incorporating the battery pack at the time of a disaster such as a flood or a tsunami.

### [Citation List]

### [Patent Literature]

[Patent Literature 1] JP2011-155232A

### [Summary of Invention]

### [Technical Problem]

However, in the streetlight described in JP2011-155232A, since the heavy battery box is mounted in a high position, there has been a problem of poor workability of installation and maintenance of the battery box.

The present invention has been made in view of the foregoing, and aims to provide a streetlight that can improve workability of installation and maintenance of a battery pack.

### [Solution to Problem]

In order to achieve the above objective, the present invention includes a configuration of a streetlight including: a plurality of battery packs arranged in an up-down direction inside a columnar member and capable of supplying electricity to an illumination device; and a control device that is disposed above the battery packs inside the columnar member and controls the battery packs, in which a battery, a relay, and a submersion sensor are provided in each battery pack, a positive terminal that outputs a voltage of the battery to the outside of the battery pack is provided in each battery pack, the positive terminal and a positive electrode of the battery are connected via the relay so as to be electrically conductive, and the relay of a battery pack is switched to a disconnected state when submersion is detected by the submersion sensor in that battery pack, while a relay of a battery pack arranged immediately above that battery pack is switched to a connected state.

### [Advantageous Effect of Invention]

According to the present invention, it is possible to provide a streetlight that can improve workability of installation and maintenance of a battery pack.

### [Brief Description of Drawings]

[Figure 1] Figure 1 is a schematic configuration diagram of a solar streetlight according to an example of the present invention, where (a) is a front view and (b) is a left side view.
[Figure 2] Figure 2 is a schematic configuration diagram of a battery pack of the solar streetlight according to the example of the present invention.
[Figure 3] Figure 3 is a block diagram illustrating an outline of electrical connection of the solar streetlight according to the example of the present invention.

### [Description of Embodiment]

A streetlight according to an embodiment of the present invention includes: a plurality of battery packs arranged in an up-down direction inside a columnar member and capable of supplying electricity to an illumination device; and a control device that is disposed above the battery packs inside the columnar member and controls the battery packs, in which a battery, a relay, and a submersion sensor are provided in each battery pack, a positive terminal that outputs a voltage of the battery to the outside of the battery pack is provided in each battery pack, the positive terminal and a positive electrode of the battery are connected via the relay so as to be electrically conductive, and the relay of a battery pack is switched to a disconnected state when submersion is detected by the submersion sensor in that battery pack, while a relay of the battery pack arranged immediately above that battery pack is switched to a connected state. With this configuration, the streetlight according to the embodiment of the present invention can improve workability of installation and maintenance of the battery pack.

### [Example]

Hereinafter, a streetlight according to an example of the present invention will be described with reference to the drawings.

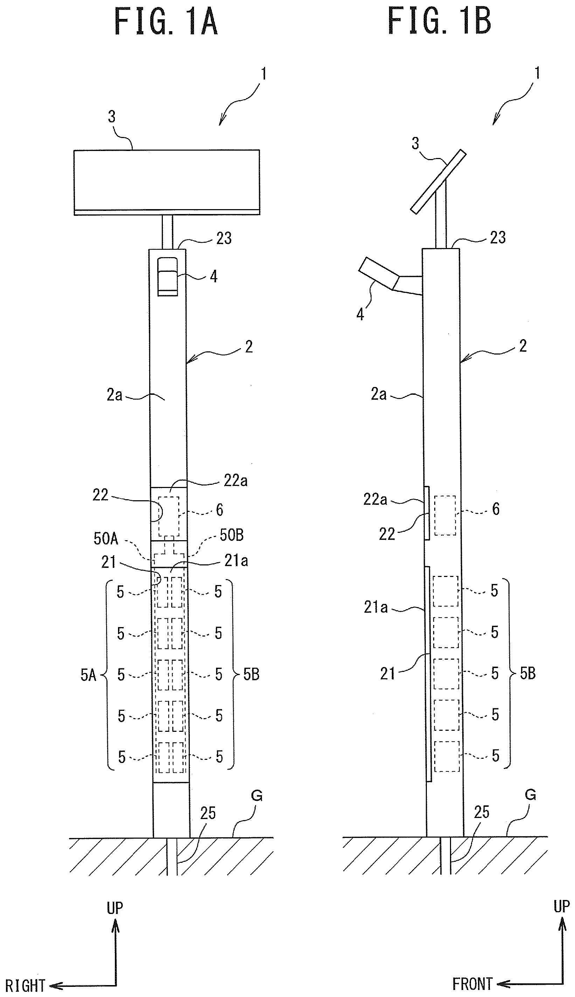

As illustrated in Figure 1, the present example uses a solar streetlight installed outside as an example of the streetlight.

### (Configuration of solar streetlight)

A solar streetlight 1 includes a columnar member 2, a solar panel 3, an illumination device 4, a plurality of battery packs 5, and a control device 6. The solar streetlight 1 is installed on a ground G.

Hereinafter, based on the columnar member 2, the illumination device 4 side is defined as "front," the opposite side thereof is defined as "back," when viewing the front side from the back side, the left side is defined as "left," the right side is defined as "right," and the upper side is defined as "up." Of the side surfaces of the columnar member 2, a side surface on which the illumination device 4 is installed is the front side of the solar streetlight 1.

The columnar member 2 is formed of a square pole, and is formed in a hollow shape having a space on the inside. The columnar member 2 can also adopt shapes other than the square pole, such as a prism or a cylinder. As will be described later, a plurality of battery packs 5 capable of supplying electricity to the illumination device 4 and the control device 6 are installed inside the columnar member 2.

The control device 6 is disposed above the plurality of battery packs 5 inside the columnar member 2. A first opening 21 and a second opening 22 located above the first opening 21 are formed on a side surface 2a on the front side of the columnar member 2.

The first opening 21 is provided in the installation position of the plurality of battery packs 5. The first opening 21 is used when performing work such as replacing the battery pack 5 and performing maintenance, for example, and is closed by a lid 21a when the work is not performed.

The second opening 22 is provided in the installation position of the control device 6. The second opening 22 is used when operating the control device 6 or performing maintenance work, for example, and is closed by a lid 22a when the operation and work are not performed.

In the present example, the installation area of the plurality of battery packs 5 inside the columnar member 2 is longer than the installation area of the control device 6 in the height direction of the columnar member 2, and therefore the first opening 21 is longer than the second opening 22 in the height direction.

A drainpipe 25 embedded below the ground G is connected to a bottom part of the columnar member 2. The drainpipe 25 is a pipe for draining moist that pools in the bottom part of the columnar member 2 to the underground as wastewater.

The solar panel 3 is attached to a top 23 of the columnar member 2. The solar panel 3 is formed of a photovoltaic module that generates electricity using optical energy from the sun, and is adjusted according to the installation location of the solar streetlight 1, so that the solar panel 3 is oriented to obtain the maximum amount of solar radiation throughout the year. The solar panel 3 is connected to the battery pack 5 and the control device 6 to be able to supply electricity thereto.

The illumination device 4 is disposed in an upper part of the side surface 2a on the front side of the columnar member 2, and shines a downward light from an upper part of the columnar member 2.

The battery pack 5 is a reused vehicle battery pack that had been mounted on a vehicle. In the present example, in order to reuse battery packs with a small capacity used in hybrid vehicles, a plurality of battery packs 5 are combined to increase the capacity for use.

In the case of reused battery packs 5, performance varies due to different capacities and degrees of deterioration in internal resistance and the like depending on the usage history. Since the remaining life differs among the plurality of combined battery packs 5, there is a high possibility that the battery pack 5 will need to be replaced during use. In the present example, by arranging the plurality of battery packs 5 inside the columnar member 2 as described above, even when an anomaly occurs in some battery packs 5, operation as a streetlight can be assured by the remaining battery packs 5.

The battery pack 5 is formed in a rectangular parallelepiped shape in which a side in the vertical direction is shorter than a side in the horizontal direction when placed in the transverse direction. "Placed in the transverse direction" refers to how the battery pack 5 is placed when mounted on a vehicle, and is how the battery pack 5 is placed so that its thickness is minimized.

In the present example, the battery pack 5 is mounted so as to be placed in the vertical direction inside the columnar member 2. Moreover, in the present example, the vertically placed plurality of battery packs 5 are arranged to align in the up-down direction inside the columnar member 2.

The plurality of battery packs 5 arranged in the up-down direction inside the columnar member 2 form a battery pack group. In the present example, five battery packs 5 arranged in the up-down direction form one battery pack group. The number of battery packs 5 included in a battery pack group is arbitrary, and is not limited to five.

Moreover, in the present example, two rows of the battery pack groups are provided inside the columnar member 2. Of the two rows of battery pack groups, one is referred to as a battery pack group 5A, and the other is referred to as a battery pack group 5B. The number of rows of the battery pack groups provided inside the columnar member 2 is not limited to two, and may be one, or three or more, for example.

The battery packs 5 of the same battery pack group are connected to the same wiring. Specifically, the five battery packs 5 included in the battery pack group 5A are connected to wiring 50A, and the five battery packs 5 included in the battery pack group 5B are connected to wiring 50B.

The wiring 50A and the wiring 50B are routed in the up-down direction inside the columnar member 2.

A positive terminal 60 and a power supply terminal 63 described later of each battery pack 5, the solar panel 3, the illumination device 4, the control device 6, and the like of the corresponding battery pack group are connected to each of the wiring 50A and the wiring 50B.

The battery pack group 5A and the battery pack group 5B form different battery pack group systems, and can function independently. For this reason, even when a trouble occurs in one system, the battery pack can be operated by the other system in which no trouble has occurred.

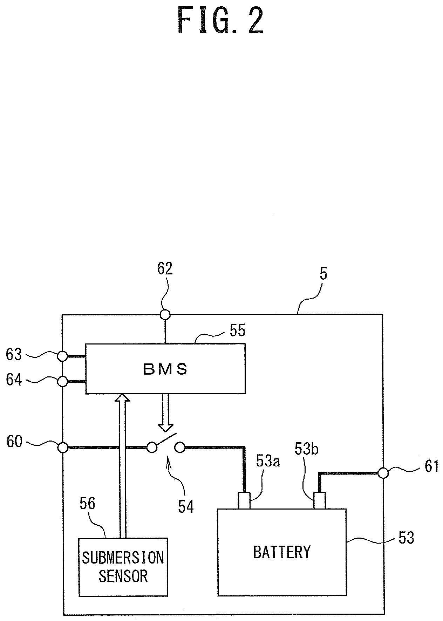

The control device 6 is connected to a battery management system (BMS) 55 (see Figure 2) described later in the battery pack 5, and controls the plurality of battery packs 5 via the BMS 55. The control device 6 exchanges information with the BMS 55 through communication.

The control device 6 is formed of a computer unit including a central processing unit (CPU), a random access memory (RAM), a read only memory (ROM), an input port, and an output port. A program for causing the computer unit to function as the control device 6 is stored, together with various constants and the like, in the ROM of the computer unit. That is, the CPU executing the program stored in the ROM by using the RAM as a work area causes the computer unit to function as the control device 6 of the present example.

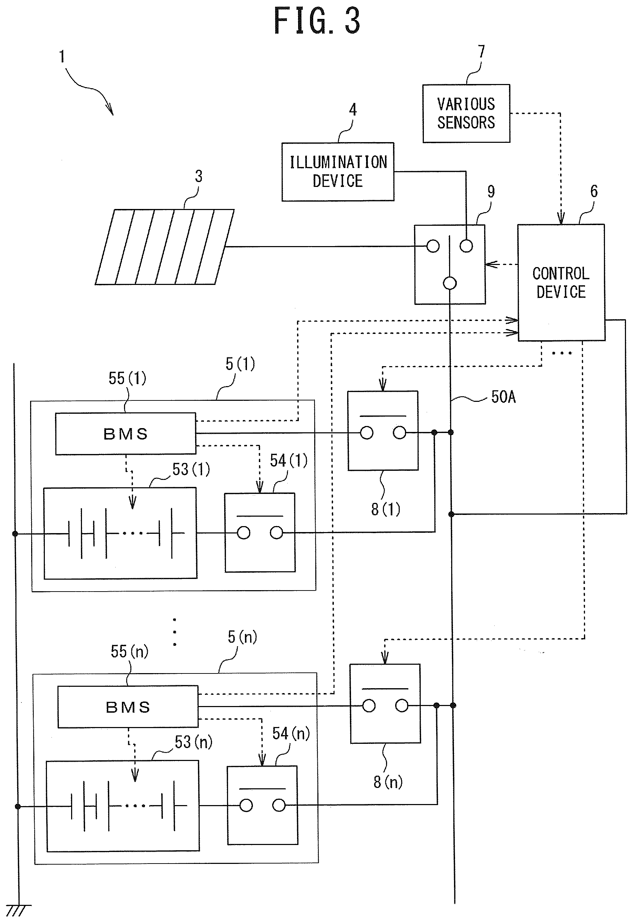

Various sensors 7 (see Figure 3) are connected to the control device 6. For example, sensors capable of detecting a change in the external environment such as an illumination sensor are connected to the control device 6. The control device 6 may include a timer that manages the lighting duration and lighting time. A configuration of the control device 6 will be described in detail later.

### (Electric configuration of battery pack)

Next, the electric configuration of the battery pack 5 of the present example will be described with reference to Figure 2.

As illustrated in Figure 2, the battery pack 5 includes a battery 53, a relay 54, a BMS 55, and a submersion sensor 56. The battery 53, the relay 54, the BMS 55, and the submersion sensor 56 are provided inside the battery pack 5.

The battery 53 is formed of a chargeable and dischargeable secondary battery such as a lithium ion battery. The battery 53 has a positive electrode 53a and a negative electrode 53b.

The positive electrode 53a of the battery 53 is connected to the positive terminal 60 via the relay 54 so as to be electrically conductive. The positive terminal 60 is a terminal that outputs the voltage of the battery 53 to the outside of the battery pack 5, and is exposed to the outside of the battery pack 5. The negative electrode 53b of the battery 53 is connected to a case of the battery pack 5 via a ground terminal 61.

The relay 54 is a switch that is provided between the positive electrode 53a of the battery 53 and the positive terminal 60, and is capable of switching between a connected state in which the positive electrode 53a of the battery 53 and the positive terminal 60 are connected and a disconnected state in which the two are disconnected.

The relay 54 is switched to the disconnected state when submersion of the battery pack 5 is detected by the submersion sensor 56.

The BMS 55 monitors and manages states of the battery 53 such as the voltage value and the state of charge (SOC) of the battery 53. The BMS 55 calculates the SOC on the basis of the charging and discharging current of the battery 53. The BMS 55 controls switching between the connected state and disconnected state of the relay 54.

The BMS 55 is connected to the control device 6 through a communication terminal 62 provided in the battery pack 5. The BMS 55 is connected to the power supply via the power supply terminal 63 and a power supply GND terminal 64 provided in the battery pack 5. In the present example, the battery 53 and the solar panel 3 are used as the power supply.

The submersion sensor 56 is a sensor that detects submersion of the battery pack 5. Various submersion sensors such as a sensor that detects submersion by sensing hydraulic pressure of a predetermined pressure or greater indicating submersion, a sensor that detects submersion when positive and negative terminals are submerged in water and there is continuity between the terminals, or the like can be used as the submersion sensor 56.

Here, the battery pack 5 is installed in the vertical direction inside the columnar member 2 to be oriented so that the positive terminal 60 is located above the submersion sensor 56. As a result, the positive terminal 60 is located above the submersion sensor 56.

### (Electrical connection of solar streetlight)

Next, the electrical connection of the solar streetlight 1 of the present example will be described with reference to Figure 3.

As illustrated in Figure 3, one to n (n = 5 in present example) battery packs 5 are provided in the solar streetlight 1 according to the present example. In the present example, in order to distinguish among the plurality of battery packs 5, the plurality of battery packs 5 are denoted by battery packs 5(1) to 5(n). When referring to one battery pack without specifying which of the battery packs 5(1) to 5(n), the battery pack is simply referred to as the "battery pack 5."

In Figure 3, the battery pack 5 of the battery pack group 5A connected to the wiring 50A is illustrated as an example of the battery packs 5(1) to 5(n). Hence, the wiring 50B and the battery pack group 5B are omitted from Figure 4.

The battery packs 5(1) to 5(n) are connected in parallel to each other with respect to the wiring 50A.

In the present example, to identify which of the battery packs 5(1) to 5(n) the battery 53, the relay 54, and the BMS 55 belong to, the batteries 53, the relays 54, and the BMSs 55 corresponding to the battery packs 5(1) to 5(n) are denoted by batteries 53(1) to 53(n), relays 54(1) to 54(n), and BMSs 55(1) to 55(n). Regarding the batteries 53(1) to 53(n), the relays 54(1) to 54(n), and the BMSs 55(1) to 55(n), when referring to one battery, relay, and BMS without specifying which of the battery packs 5(1) to 5(n) the components belong to, the components are simply referred to as the "battery 53," the "relay 54," and the "BMS 55."

A first switch 8 capable of switching between an ON state in which the BMS 55 and the wiring 50A are connected and an OFF state in which the two are disconnected is provided between the BMS 55 and the wiring 50A. At least one first switch 8 is provided for each BMS 55. While the present example describes an example in which one first switch 8 is provided for each BMS 55, two or more first switches 8 may be provided for each BMS 55.

In the present example, to identify which of the BMSs 55(1) to 55(n) the first switch 8 belongs to, the first switches 8 corresponding to the BMSs 55(1) to 55(n) are denoted by first switches 8(1) to 8(n). Regarding the first switches 8(1) to 8(n), when referring to one switch without specifying which of the BMSs 55(1) to 55(n) the switch belongs to, the switch is simply referred to as the "first switch 8."

The control device 6 controls the switching between the ON state and the OFF state of the first switch 8.

A second switch 9 is connected to one end of the wiring 50A. The second switch 9 is a switch that is provided between the wiring 50A, and the solar panel 3 and illumination device 4, and is capable of switching between an ON state in which the wiring 50A and the solar panel 3 or illumination device 4 are connected and an OFF state in which the two are disconnected.

That is, the second switch 9 is capable of switching between an ON state which is either a power generation-ON state connecting the wiring 50A and the solar panel 3 or a discharge-ON state connecting the wiring 50A and the illumination device 4, and an OFF state not connecting the wiring 50A with any of the solar panel 3 and the illumination device 4.

The control device 6 controls the switching between the power generation-ON state or discharge-ON state and the OFF state of the second switch 9. In a state where the power of the control device 6 is not turned on, such as at the time of initial startup of the solar streetlight 1, from the viewpoint of ensuring electricity for starting the solar streetlight 1, it is preferable that the second switch 9 be switched to the power generation-ON state.

The control device 6 is connected to the wiring 50A, and receives supply of electricity from at least one of the solar panel 3 and the battery packs 5(1) to 5(n) via the wiring 50A. The control device 6 controls switching between the ON state and the OFF state of the first switch 8 and the second switch 9.

In the present example, the battery packs 5 are arranged from top to bottom in the order of the battery packs 5(1) to 5(n) inside the columnar member 2. The first switch 8 is arranged above the relay 54.

### (Operation of solar streetlight)

Next, an operation of the solar streetlight 1 when an installation location of the solar streetlight 1 is flooded will be described. In the solar streetlight 1 configured as described above, when an installation location of the solar streetlight 1 is flooded, the following operation is performed.

For example, when the submersion sensor 56 of the battery pack 5(n) detects submersion in a state where the battery pack 5(n) is supplying electricity, the first switch 8(n-1) of the battery pack 5(n-1) arranged immediately above the battery pack 5(n) is switched to the ON state.

After the first switch 8(n-1) is switched to the ON state, the relay 54(n-1) is switched to the connected state. Thereafter, the relay 54(n) of the battery pack 5(n) is switched to the disconnected state.

When the relay 54(n) is switched to the disconnected state, the first switch 8(n) is switched to the OFF state.

By operating the solar streetlight 1 in the above procedure, it is possible to prevent interruption of the electricity supply from the battery pack 5. Additionally, even when some battery packs 5 are submerged in water, the remaining battery packs 5 can be used to continue lighting by the illumination device 4.

The control device 6 is installed above the uppermost battery pack 5(1), and therefore can maintain the electricity supply from the battery pack 5 and continue lighting by the illumination device 4 until all of the battery packs 5 are submerged in water.

Additionally, as described above, when the installation location of the solar streetlight 1 is flooded, the submersion sensors 56 in the battery packs 5 are sequentially activated from the lowermost battery pack 5 to the uppermost battery pack 5 installed inside the columnar member 2.

In this case, as described above, since the control device 6 is installed above the battery pack 5, the control device 6 is able to operate as long as the control device 6 is not submerged in water even when all the battery packs 5 are submerged in water. Accordingly, the control device 6 can grasp whether or not all of the battery packs 5 are submerged in water.

When receiving information indicating submersion from the submersion sensor 56 of a certain battery pack 5 among the plurality of battery packs 5 belonging to the same battery pack group, if information indicating submersion is not received from the submersion sensor 56 of the battery pack 5 lower than the battery pack 5 that has detected submersion, the control device 6 determines that an anomaly has occurred in the submersion sensor 56 that has transmitted the information indicating submersion.

Note that the control device 6 may determine whether the submersion sensor 56 having transmitted the information indicating submersion is normal or abnormal by a majority rule regarding the state of reception from submersion sensors 56 including the submersion sensors 56 of the battery packs 5 lower than the battery pack 5 that has detected submersion.

When receiving information indicating submersion from the submersion sensor 56 of a certain battery pack 5 belonging to one battery pack group among a plurality of battery pack groups, if no information indicating submersion has been received from the battery pack 5 belonging to another battery pack group at the same height as the battery pack 5 that has detected submersion, the control device 6 determines that an anomaly has occurred in the submersion sensor 56 that has transmitted the information indicating submersion.

Note that the control device 6 may determine whether the submersion sensor 56 having transmitted the information indicating submersion is normal or abnormal by a majority rule regarding the state of reception from submersion sensors 56 including the submersion sensors 56 of the battery packs 5 at the same height as the battery pack 5 that has detected submersion but belonging to another battery pack group.

As described above, the solar streetlight according to the present example is configured such that the control device 6 is disposed above the battery pack 5 inside the columnar member 2, and the relay 54 provided between the positive electrode 53a of the battery 53 and the positive terminal 60 is switched to a disconnected state when submersion is detected by the submersion sensor 56.

With this configuration, the solar streetlight according to the present example can prevent electric leakage from the battery 53 by stopping the electricity from the battery 53 when the battery pack 5 is submerged in water. As a result, a secondary disaster due to the electric leakage can also be prevented.

Here, when the battery pack is mounted in a low position, the battery pack is more likely to be submerged in water. However, in the streetlight according to the present example, as described above, electric leakage is prevented by stopping electricity from the battery 53 when the battery pack 5 is submerged in water. Hence, the battery pack 5 can be mounted in a low position.

As a result, the solar streetlight according to the present example can improve workability of installation and maintenance of the battery pack 5.

In addition, in the solar streetlight according to the present example, a plurality of battery packs 5 are arranged to align in the up-down direction inside the columnar member 2 and each of the plurality of battery packs 5 has the submersion sensor 56. Hence, even when some of the plurality of battery packs 5 are submerged in water, the remaining battery packs 5 can be used to operate the solar streetlight 1.

In addition, in the solar streetlight according to the present example, the positive terminal 60 is located above the submersion sensor 56, and therefore it is possible to switch the relay 54 to the disconnected state before the positive terminal 60 is submerged in water and prevent output of voltage to the outside of the battery pack 5.

While the present example describes a case in which the streetlight according to the present invention is applied to the solar streetlight 1 using the solar panel 3 as the power plant, the present invention is not limited thereto. For example, the streetlight according to the present invention may be applied to a streetlight including an aerogenerator as the power plant.

While an example of the present invention has been disclosed, changes can be made without departing from the scope of the present invention by a person skilled in the art, as a matter of course. The invention is defined in the following claims.

### [Reference Signs List]

- 1: solar streetlight (streetlight)
- 2: columnar member
- 2a: side surface
- 3: solar panel
- 4: illumination device
- 5: battery pack
- 5A, 5B: battery pack group
- 6: control device
- 21: first opening
- 22: second opening
- 23: top
- 25: drainpipe
- 50A, 50B: wiring
- 53: battery
- 53a: positive electrode
- 53b: negative electrode
- 54: relay
- 55: BMS
- 56: submersion sensor
- 60: positive terminal
- 61: ground terminal
- G: ground

## Claims

1. A streetlight (1) comprising:
a plurality of battery packs (5) arranged in an up-down direction inside a columnar member (2) and capable of supplying electricity to an illumination device (4); and
a control device (6) that is disposed above the battery packs (5) inside the columnar member (2) and controls the battery packs (5), wherein
a battery (53), a relay (54), and a submersion sensor (56) are provided in each battery pack (5),
a positive terminal (60) that outputs a voltage of the battery (53) to the outside of the battery pack (5) is provided in each battery pack (5),
the positive terminal (60) and a positive electrode (53a) of the battery (53) are connected via the relay (54) so as to be electrically conductive, wherein
the relay (54) of a battery pack (5) is switched to a disconnected state when submersion is detected by the submersion sensor (56) in that battery pack (5), while a relay (54) of a battery pack (5) arranged immediately above that battery pack (5) is switched to a connected state.

2. The streetlight (1) as claimed in claim 1, wherein in each battery pack (5) the positive terminal (60) is located above the submersion sensor (56).

3. The streetlight (1) as claimed in any one of claims 1 or 2, wherein each battery pack (5) is a reused on-vehicle battery pack.

## Patentansprüche

1. Straßenleuchte (1), umfassend:
eine Mehrzahl von Batteriepacks (5), welche in einer Oben-Unten-Richtung im Inneren eines säulenförmigen Elements (2) angeordnet sind, und in der Lage ist, Elektrizität an eine Beleuchtungsvorrichtung (4) zu liefern; und
eine Steuervorrichtung (6), welche über den Batteriepacks (5) im Inneren des säulenförmigen Elements (2) angeordnet ist und die Batteriepacks (5) steuert, wobei
eine Batterie (53), ein Relais (54) und ein Untertauchsensor (56) in jedem Batteriepack (5) bereitgestellt sind,
ein positiver Anschluss (60), welcher eine Spannung der Batterie (53) zu dem Äußeren des Batteriepacks (5) ausgibt, in jedem Batteriepack (5) bereitgestellt ist,
der positive Anschluss (60) und eine positive Elektrode (53a) der Batterie (53) über das Relais (54) verbunden sind, um elektrisch leitfähig zu sein, wobei
das Relais (54) eines Batteriepacks (5) in einen getrennten Zustand geschaltet wird, wenn ein Untertauchen durch den Untertauchsensor (56) in diesem Batteriepack (5) detektiert wird, während ein Relais (54) eines Batteriepacks (5), welcher unmittelbar über diesem Batteriepack (5) angeordnet ist, in einen verbundenen Zustand geschaltet wird.

2. Straßenleuchte (1) nach Anspruch 1, wobei sich in jedem Batteriepack (5) der positive Anschluss (60) über dem Untertauchsensor (56) befindet.

3. Straßenleuchte (1) nach einem der Ansprüche 1 oder 2, wobei jeder Batteriepack (5) ein wiederverwendeter Fahrzeug-Batteriepack ist.

## Revendications

1. Réverbère (1) comprenant :
une pluralité de blocs-batteries (5) agencés dans une direction haut-bas à l'intérieur d'un élément en colonne (2) et capables d'alimenter en électricité un dispositif d'éclairage (4) ; et
un dispositif de commande (6) qui est disposé au-dessus des blocs-batteries (5) à l'intérieur de l'élément en colonne (2) et qui commande les blocs-batteries (5), dans lequel
une batterie (53), un relais (54) et un capteur d'immersion (56) sont disposés dans chaque bloc-batterie (5),
une borne positive (60) qui délivre une tension de la batterie (53) à l'extérieur du bloc-batterie (5) est disposée dans chaque bloc-batterie (5),
la borne positive (60) et une électrode positive (53a) de la batterie (53) sont connectées via le relais (54) de manière à être électriquement conductrices, dans lequel
le relais (54) d'un bloc-batterie (5) est commuté dans un état déconnecté lorsqu'une immersion est détectée par le capteur d'immersion (56) dans ce bloc-batterie (5), tandis qu'un relais (54) d'un bloc-batterie (5) agencé immédiatement au-dessus de ce bloc-batterie (5) est commuté dans un état connecté.

2. Réverbère (1) selon la revendication 1, dans lequel, dans chaque bloc-batterie (5), la borne positive (60) est située au-dessus du capteur d'immersion (56).

3. Réverbère (1) selon l'une quelconque des revendications 1 ou 2, dans lequel chaque bloc-batterie (5) est un bloc-batterie embarqué réutilisé.
